# EUROPEAN PATENT APPLICATION

(11) **EP 4 610 401 A1**
(43) Date of publication of application: **03.09.2025**
(21) Application number: 23898255.7
(22) Date of filing: 28.11.2023
(51) Int. Cl.: C25B 9/77, C25B 9/23, C25B 13/02, C25B 1/23, C25B 3/26, C25B 1/04

(54) **ELECTROLYSIS DEVICE**

(30) Priority: 28.11.2022 KR 20220161754; 27.11.2023 KR 20230166825
(71) Applicant: LG CHEM, LTD., Seoul 07336 (KR)
(72) Inventor: KIM, Kwang Hwan, Daejeon 34122 (KR); NOH, Tae Geun, Daejeon 34122 (KR); LEE, Jong Jin, Daejeon 34122 (KR); NOH, Tai Min, Daejeon 34122 (KR); PARK, Joon Ho, Daejeon 34122 (KR)
(74) Representative: Plasseraud IP
(86) International application number: PCT/KR2023/019327
(87) International publication number: WO 2024/117729

(57) **Abstract**

The present invention relates to an electrolyzer, and the electrolyzer according to the present invention includes a plurality of separation plates, and a membrane-electrode assembly disposed between the plurality of separation plates and including a plurality of electrodes and a separator disposed between the plurality of electrodes, wherein each of the separation plates includes a first passage part in which embossings and engravings are alternately disposed on an active area of one surface thereof to provide a first passage, and a second passage part in which embossings and engravings are alternately disposed on an active area of the other surface thereof to correspond to the embossings and engravings provided in the first passage part so as to provide a second passage.

## Description

### TECHNICAL FIELD

### CROSS-REFERENCE TO RELATED APPLICATION

The present application claims the benefit of the priority of Korean Patent Application Nos. 10-2022-0161754, filed on November 28, 2022, and 10-2023-0166825, filed on November 27, 2023, which are hereby incorporated by reference in their entirety.

### TECHNICAL FIELD

The present invention relates to an electrolyzer.

### BACKGROUND ART

Currently, carbon dioxide is a greenhouse gas that causes global warming and has to be reduced. A method for reducing carbon dioxide include capture, chemical conversion, or electrochemical conversion. Among these, the electrochemical conversion method may precisely control components so that other synthetic gases are be manufactured to provide economic benefits over simply removing carbon dioxide.

In water electrolysis systems that electrochemically convert carbon dioxide or decompose water to produce hydrogen, a membrane-electrode assembly (MEA)-based system operates under high current density conditions, has high energy efficiency, and easily is stacked and modularized, and thus, researches are actively conducted.

In a unit cell of the membrane electrode assembly system, an anode and a cathode are disposed around a membrane, electrical energy and reactants are supplied to the anode and cathode electrodes, a passage through which the product is discharged to provide a separation plate, and unit cells are stacked to manufacture a stack. In a membrane electrode assembly system, if the anode and cathode-side separation plates are manufactured and bonded separately, cost of manufacturing the separation plate increases, and above all, resistance is generated at a bonding interface to deteriorate energy efficiency.

### DISCLOSURE OF THE INVENTION

### TECHNICAL PROBLEM

One aspect of the present invention is to provide an electrolyzer that is capable of improving energy efficiency while reducing manufacturing costs.

### TECHNICAL SOLUTION

An electrolyzer according to an embodiment of the present invention includes a plurality of separation plates, and a membrane-electrode assembly disposed between the plurality of separation plates and including a plurality of electrodes and a separator disposed between the plurality of electrodes, wherein each of the separation plates includes a first passage part in which embossings and engravings are alternately disposed on an active area of one surface thereof to provide a first passage, and a second passage part in which embossings and engravings are alternately disposed on an active area of the other surface thereof to correspond to the embossings and engravings provided in the first passage part so as to provide a second passage.

### ADVANTAGEOUS EFFECTS

According to the present invention, in the electrolyzer for electrolyzing carbon dioxide, the separation plate facing the anode and cathode electrodes of the membrane-electrode assembly may be engraved or embossed to be provided as one, thereby reducing the manufacturing costs and improving the energy efficiency.

In addition, the plurality of separation plates may be stacked so that one surface and the other surface thereof are reversed in the stacking direction with the membrane-electrode assembly therebetween to prevent the passage of the separation plate stacked at the upper portion from being blocked by the separation plate stacked at the lower portion.

In addition, the first gasket and the second gasket, which are disposed on one surface and the other surface of the separation plate, may be provided to have the thicknesses different from each other, thereby more effectively maintaining the sealing.

### BRIEF DESCRIPTION OF THE DRAWINGS

FIG. 1 is an exploded perspective view illustrating an example of an electrolyzer according to an embodiment of the present invention.
FIG. 2 is a cross-sectional view taken along line A-A' of FIG. 1.
FIG. 3 is an enlarged cross-sectional view of an area B of FIG. 2.
FIG. 4 is a plan view illustrating an example of one surface of a separation plate in the electrolyzer according to an embodiment of the invention.
FIG. 5 is a plan view illustrating an example of the other surface of the separation plate in the electrolyzer according to an embodiment of the invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

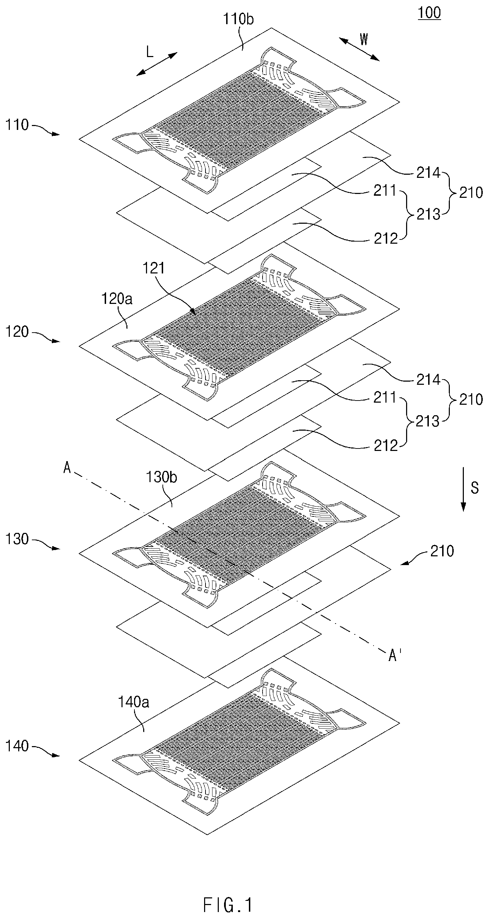

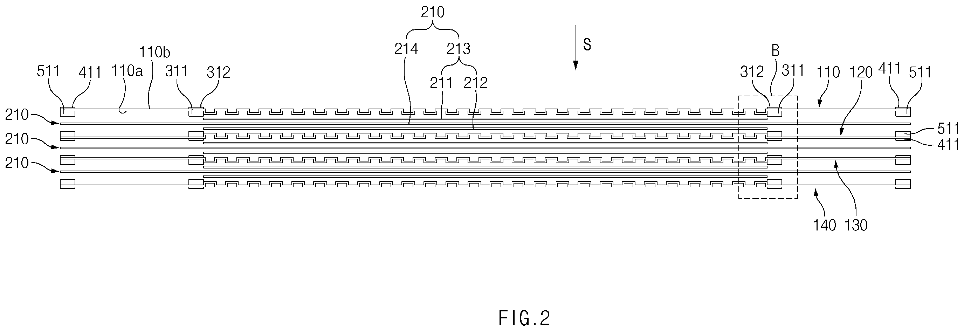

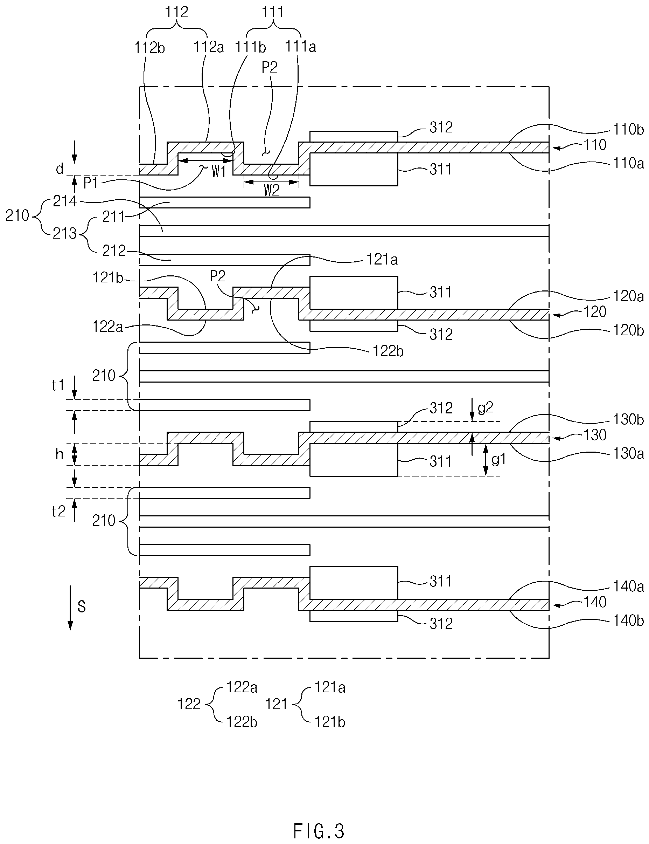

FIG. 1 is an exploded perspective view illustrating an example of an electrolyzer according to an embodiment of the present invention, FIG. 2 is a cross-sectional view taken along line A-A' of FIG. 1, and FIG. 3 is an enlarged cross-sectional view of an area B of FIG. 2.

Referring to FIGS. 1 to 3, an electrolyzer 100 according to an embodiment of the present invention may include a plurality of separation plates 110, 120, 130, and 140, and a membrane-electrode assembly 210 disposed between the plurality of separation plates 110, 120, 130, and 140 and including a plurality of electrodes 213 and a separator 214, and each of the separation plates 110, 120, 130, and 140 may include first passage parts 111 and 121 on which embossings 111a and 121a and engravings 111b and 121b are alternately disposed on an active area A1 of each of one surfaces 110a, 120a, 130a, and 140a and second passage parts 112 and 122 on which engravings 112b and 122b and embossings 112a and 122a are alternately disposed on an active area A2 of each of the other surfaces 110b, 120b, 130b, and 140b to correspond to the embossings 111a and 121a and the engravings 111b and 121b disposed on the first passages parts 111 and 121. In addition, the electrolyzer 100 according to an embodiment of the present invention may further include a first gasket 311 and a second gasket 312.

More specifically, the electrolyzer 100 according to an embodiment may electrolyze carbon dioxide (CO₂) by causing an electrochemical reduction reaction of carbon dioxide (CO₂).

The electrolyzer 100 may include a plurality of separation plates 110, 120, 130, and 140 and a membrane-electrode assembly 210 disposed between the plurality of separation plates 110, 120, 130, and 140.

The separation plates 110, 120, 130, and 140 and the membrane-electrode assembly 210 may be alternately stacked, and the separation plates 110 and 140 may be disposed at the uppermost and lowermost sides in a stacking direction S.

The membrane-electrode assembly 210 may be disposed between the plurality of separation plates 110, 120, 130, and 140 and may include a plurality of electrodes 213 and a separator 214 disposed between the plurality of electrodes 213.

The electrode 213 includes an anode 211 and a cathode 212, and the anode 211 and the cathode 212 may be alternately disposed in the stacking direction S.

The separator 214 may be provided as an ion exchange membrane I (IEM) made of an insulating material, and thus, ions may move between the anode 211 and the cathode 212.

In addition, the membrane-electrode assembly 210 may cause the electrochemical reduction reaction. Here, the membrane-electrode assembly 210 may, for example, electrolyze carbon dioxide (CO₂) into carbon monoxide (CO) or ethylene (C₂H₄).

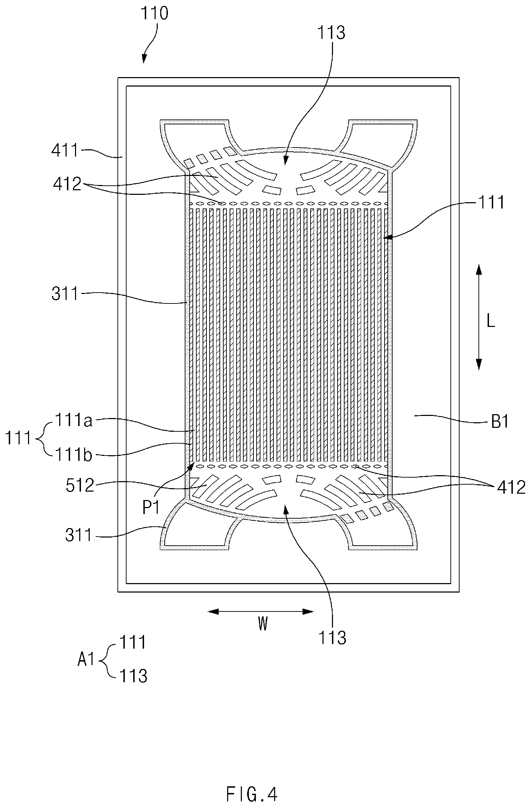

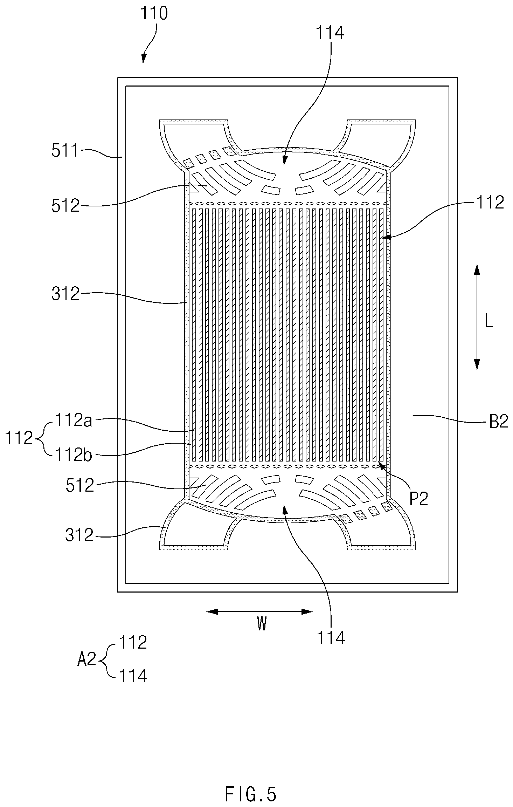

FIG. 4 is a plan view illustrating an example of one surface of the separation plate in the electrolyzer according to an embodiment of the invention, and FIG. 5 is a plan view illustrating an example of the other surface of the separation plate in the electrolyzer according to an embodiment of the invention.

Referring to FIGS. 1 to 5, the separation plates 110, 120, 130, and 140 may include first passage parts 111 and 121, on which embossings 111a and 121a and engravings 111b and 121b are alternately disposed on the active area A1 of one surfaces 110a, 120a, 130a, and 140a to define a first passage P1, and second passage parts 112 and 122 on which engravings 112b and 122b and embossings 112a and 122a, which correspond to the embossings 111a and 121a and the engravings 111b and 121b disposed on the first passage parts 111 and 121, are alternately disposed on the active area A2 of the other surfaces 110b, 120b, 130b and 140b to define a second passage P2.

The first passage parts 111 and 121 may face the electrode 213, the first passage P1 through which a raw material fluid moves may be opened toward the electrode 213, the second passage parts 112 and 122 may face the electrode 213, and the second passage P2 through which the raw material fluid moves may be opened toward the electrode 213. Here, the raw material fluid may include, for example, carbon dioxide (CO₂) and an electrolyte. Here, the electrolyte may include water (H₂O).

The embossings 111a and 121a of the first passage parts 111 and 121 disposed on the active area A1 of one surfaces 110a, 120a, 130a, and 140a of the separation plates 110, 120, 130, and 140 may protrude from an inactive area B1, and engravings 112b and 122b of the second passage parts 112 and 122 disposed on the active area A2 of the other surfaces 110b, 120b, 130b, and 140b of the separation plates 110, 120, 130, and 140 may be recessed into an inactive area B2.

The first passage P1 may be provided in the engravings 111b and 121b of the first passage parts 111 and 121, and the second passage P2 may be provided in the engravings 112b and 122b of the second passage parts 112 and 122.

The first passage P1 and the second passage P2 may have a parallel shape. Here, for example, the embossings 111a, 121a, 112a, and 122a and the engravings 111b, 121b, 112b, and 122b provided on the first passage parts 111 and 121 and the second passage parts 112 and 122 of the separation plates 110, 120, 130, and 140 may be disposed in a width direction W of the separation plates 110, 120, 130, and 140, and the first passage P1 and the second passage P2 may be disposed in a longitudinal direction L of the second gasket of the separation plates 110, 120, 130, and 140.

The embossings 111a, 121a, 112a, and 122a and the engravings 111b, 121b, 112b, and 122b provided on the first passage parts 111 and 121 and the second passage parts 112 and 122 may be provided in a square shape.

In addition, each of a width W1 of each of the engravings 111b and 121b provided in the first passage parts 111 and 121 and a width W2 of each of the engravings 112b and 122b provided in the second passage parts 112 and 122 may be 100 um to 5,000 um. Thus, each of the width W1 of the engravings 111b and 121b provided in the first passage parts 111 and 121 and the width of the engravings 112b and 122b provided in the second passage parts 112 and 122 may be greater than 100 um, and thus, a pressure within each of the separation plates 110, 120, 130, and 140 may be significantly relieved during a flow of the fluid. In addition, each of the width W1 of each of the engravings 111b and 121b provided in the first passage parts 111 and 121 and the width W2 of each of the engravings 112b and 122b provided in the second passage parts 112 and 122 may be less than 5,000 um, and thus, electrical resistance may be significantly reduced. That is, if the widths W1 and W2 of the engravings 112b and 122b of the first passage parts 111 and 121 and the second passage parts 112 and 122 are too large, an area on which the electrode 213 and the separation plates 110, 120, 130, and 140 are in contact with each other may decrease to cause a problem of increasing in electrical resistance, but the widths W1 and W2 of the engravings 111b, 121b, 112b, and 122b may be provided to be less than 5000um to significantly reduce the problem of increasing in electrical resistance.

In addition, the width W1 of the engravings 111b and 121b provided in the first passage parts 111 and 121 and the width W2 of the engravings 112b and 122b provided in the second passage parts 112 and 122 may be the same. Thus, there is an effect of having reaction uniformity. That is, if the width W1 of the engravings 111b and 121b provided in the first passage parts 111 and 121 and the width W2 of the engravings 111b and 121b provided in the second passage parts 112 and 122 are the same, the widths at which the reaction fluids of the first passage P1 and the second passage P2 in which the engravings 111b and 121b provided in the first passage parts 111 and 121 and the engravings 112b and 122b provided in the second passage parts 112 and 122 are in contact with the electrode 213 may be constant to cause uniform reaction.

In the plurality of separation plates 110, 120, 130, and 140, the one surfaces 110a, 120a, 130a, and 140a and the other surfaces 110b, 120b, 130b, and 140b may be stacked in the stacking direction S to be inverted with the membrane-electrode assembly 210 therebetween.

Here, for example, when the separation plates 110, 120, 130, and 140 are reversed, the embossing 111a of the first passage part 111 in the separation plate 110, which is disposed at an upper side in the stacking direction S, and the embossing 121a of the first passage part 121 in the separation plate 120, which is disposed at a lower side in the stacking direction S, may be disposed to face each other with the membrane-electrode assembly 210 therebetween. Thus, during the stacking, the embossing 122a of the second passage part 122 in the separation plate 120 disposed at a lower side and the membrane-electrode assembly 210 may be inserted together into the engraving 111b of the first passage part 111 in the separation plate 110 disposed at an upper side to prevent the first passage P1 provided in the engraving 111b of the first passage part 111 in the separation plate 120 disposed at the upper side from being blocked.

The active area A1 of the one surfaces 110a, 120a, 130a, and 140a of the separation plates 110, 120, 130, and 140 may further include a first distribution part 113 through which the fluid is introduced into and discharged from the first passage. The active area A2 of the other surfaces 110b, 120b, 130b, and 140b of the separation plates 110, 120, 130, and 140 may include a second distribution part 114 through which the fluid is introduced into and discharged from the second passage P2.

A thickness d of each of the separation plates 110, 120, 130, and 140 may be 50 µm to 500 µm. Thus, the thickness d of each of the separation plates 110, 120, 130, and 140 may be greater than 50 µm to prevent distortion during processing of the separation plates 110, 120, 130, and 140 from occurring. In addition, the thickness d of each of the separation plates 110, 120, 130, and 140 may be less than 500um, and thus, each of the engravings 111b, 121b, 112b, and 122b provided in the first passage parts 111 and 121 and the second passage parts 112 and 122 of the separation plates 110, 120, 130, and 140 may have a width W2 of 100 um or more. That is, when the thickness d of each of the separation plates 110, 120, 130, and 140 is 500 um or more, the thickness d of each of the separation plates 110, 120, 130, and 140 may be too thick, and thus, when manufacturing the separation plates 110, 120, 130, and 140, each of the first passage parts 111 and 121 and the second passage parts 112 and 122 may not have a width W2 of 100 um or more, but when the thickness d of each of the separation plates 110, 120, 130, and 140 is less than 500um, the engravings 111b, 121b, 112b, and 122b of the first passage parts 111 and 121 and the second passage parts 112 and 122 may have widths W1 and W2 of 100 um or more at which the pressure within the separation plates 110, 120, 130, and 140 while the fluid flows is significantly relieved.

The first gasket 311 may be disposed on the inactive area B1 of the one surfaces 110a, 120a, 130a, and 140a of the separation plates 110, 120, 130, and 140, and the second gasket 312 may be disposed on the inactive area B2 of the other surfaces 110b, 120b 130b, and 140b of the separation plates 110, 120, 130, and 140.

In addition, the first gasket 311 and the second gasket 312 may have different thicknesses g1 and g2 in the stacking direction S, respectively. Thus, according to a height h of the embossings 111a, 121a, 112a, and 122a and engravings 111b, 121b, 112b, and 122b provided on the separation plates 110, 120, 130, and 140 and thicknesses t1 and t2 of the electrode 213, a thickness g1 of the first gasket 311 and a thickness g2 of the second gasket 312 disposed on the one surfaces 110a, 120a, 130a, and 140a and the other surfaces 110b, 120b, 130b, and 140b of the separation plates 110, 120, 130, and 140 may be provided to be different from each other to more effectively maintain the sealing.

In addition, the first gasket 311 and the second gasket 312 may be disposed on the same line in the stacking direction S.

The thickness g1 of the first gasket 311 may be the same as the sum of the thickness t2 of the electrode 213 facing the one surfaces 110a, 120a, 130a, and 140a of the separation plates 110, 120, 130, and 140 in the plurality of electrodes 213 and the protruding height h of the embossings 111a and 121a disposed on the one surfaces 110a, 120a, 130a, and 140a of the separation plates 110, 120, 130, and 140. Here, the thickness g2 of the second gasket 312 may be the same as the thickness t1 of the electrode 213 facing the other surfaces 110b, 120b, 130b, and 140b of the separation plates 110, 120, 130, and 140 in the plurality of electrodes 213.

In addition, the first gasket 311 may be provided along an edge of the active area A1 on the one surfaces 110a, 120a, 130a, and 140a of the separation plates 110, 120, 130, and 140 to maintain the sealing of the active area A1 of the one surfaces 110a, 120a, 130a, and 140a, and the second gasket 312 may be provided along an edge of the active area A2 of the other surfaces 110b, 120b, 130b, and 140b of the separation plates 110, 120, 130, and 140 to maintain the sealing of the active area A2 of the other surfaces 110b, 120b, 130b, and 140b of the separation plates 110, 120, 130, and 140.

The electrolyzer 100 according to an embodiment of the present invention may further includes one edge gasket 411 provided along edges of the one surfaces 110a, 120a, 130a, and 140a of the separation plates 110, 120, 130, and 140 and the other edge gasket 511 provided along edges of the other surfaces 110b, 120b, 130b, and 140b of the separation plates 110, 120, 130, and 140. Here, a thickness of the one edge gasket 411 in the stacking direction S may correspond to the thickness g1 of the first gasket 311, and the thickness of the other edge gasket 511 in the stacking direction S may correspond to the thickness g2 of the second gasket 312.

In addition, the electrolyzer 100 according to an embodiment of the present invention may further include distribution gaskets 412 and 512 provided with a first distribution part 113 and a second distribution part 114 of the separation plates 110, 120, 130, and 140 to branch the passage.

In the electrolyzer 100 according to an embodiment of the present invention, the separation plates 110, 120, 130, and 140 facing the electrodes 213 of the anode 211 and the cathode 212 of the membrane-electrode assembly 210 may be provided into one body by providing the embossings 111a, 121a, 112a, and 122a and the engravings 111b, 121b, 112b, and 122b to improve the energy efficiency while reducing the manufacturing cost. That is, when electrochemically converting carbon dioxide or decomposing water to produce hydrogen, an aqueous solution-based electrolyte may be supplied to the anode 211, and thus, there is no need to supply separate cooling water. Thus, the embossings 111a, 121a, 112a, and 122a and the engravings 111b, 121b, 112b, and 122b may be provided on one separation plate 110, 120, 130, and 140 to provide the passages of the anode 211 and the cathode 212. Thus, the manufacturing cost may be reduced by using the one separation plate 110, 120, 130, and 140 instead of two separation plates, and the interface resistance that occurs when using two separation plates may not be generated to improve the energy efficiency due to the decrease in resistance.

In addition, in the plurality of separation plates 110, 120, 130, and 140, the one surfaces 110a, 120a, 130a, and 140a and the other surfaces 110b, 120b, 130b, and 140b may be stacked to be inverted mutually in the stacking direction S with the membrane-electrode assembly 210 therebetween to prevent the passage provided in the engravings 111b, 121b, 112b, and 122b of the separation plates 110, 120, and 130 stacked on the upper portion in the stacking direction S from being blocked by the embossings 111a, 121a, 112a, and 122a of the separation plates 120, 130, and 140 stacked at the lower portion in the stacking direction S.

Furthermore, according to a height h of the embossings 111a, 121a, 112a, and 122a and engravings 111b, 121b, 112b, and 122b provided on the separation plates 110, 120, 130, and 140 and thicknesses t1 and t2 of the electrode 213, the thicknesses g1 and g2 of the first gasket 311 and the second gasket 312 disposed on the one surfaces 110a, 120a, 130a, and 140a and the other surfaces 110b, 120b, 130b, and 140b of the separation plates 110, 120, 130, and 140 may be provided to be different from each other to more effectively maintain the sealing.

While the present invention has been particularly shown and described with reference to exemplary embodiments thereof, it is to be understood that the scope of the present invention is not limited to the post-processing device according to the present invention. It will be understood by those of ordinary skill in the art that various changes in form and details may be made therein without departing from the spirit and scope of the present invention.

Furthermore, the scope of protection of the present invention will be clarified by the appended claims.

### [Description of the Symbols]

100: Electrolyzer
110,120,130,140: Separation plate
110a,120a,130a,140a: One surface
110b,120b,130b,140b: The other surface
111,121: First passage part
112,122: Second passage part
111a,121a: Embossing
111b,121b: Engraving
113: First distribution part
114: Second distribution part
210: Membrane-electrode assembly
211: Anode
212: Cathode
213: Electrode
214: Separator
311: First gasket
312: Second gasket
411: One edge gasket
511: The other edge gasket
A1,A2: Active area
B1,B2: Inactive area
L: Longitudinal direction
W: Width direction
S: Stacking direction
P1: First passage
P2: Second passage

## Claims

1. An electrolyzer comprising:
a plurality of separation plates; and
a membrane-electrode assembly disposed between the plurality of separation plates and comprising a plurality of electrodes and a separator disposed between the plurality of electrodes,
wherein each of the separation plates comprises:
a first passage part in which embossings and engravings are alternately disposed on an active area of one surface thereof to provide a first passage; and
a second passage part in which embossings and engravings are alternately disposed on an active area of the other surface thereof to correspond to the embossings and engravings provided in the first passage part so as to provide a second passage.

2. The electrolyzer of claim 1, wherein the first passage part is disposed to face the electrode, and the first passage through which a raw material fluid moves is opened toward the electrode, and
the second passage part is disposed to face the electrode, and the second passage through which the raw material fluid moves is opened toward the electrode.

3. The electrolyzer of claim 1, wherein the plurality of separation plates are stacked so that one surface and the other surface are inverted in a stacking direction with the membrane-electrode assembly therebetween.

4. The electrolyzer of claim 3, wherein the electrode comprises an anode and a cathode, and
the anode and the cathode are alternately disposed in the stacking direction.

5. The electrolyzer of claim 1, further comprising:
a first gasket disposed on an inactive area of one surface of the separation plate; and
a second gasket disposed on an inactive area of the other surface of the separation plate,
wherein the first gasket and the second gasket have different thicknesses in a stacking direction.

6. The electrolyzer of claim 5, wherein the first gasket and the second gasket are disposed on the same line in the stacking direction.

7. The electrolyzer of claim 5, wherein the embossings of the first passage part disposed on the active area of one surface of the separation plate protrude from the inactive area, and
the engravings of the second passage part disposed on the active area of the other surface of the separation plate are recessed into the inactive area.

8. The electrolyzer of claim 7, wherein a thickness of the first gasket is the same as the sum of a thickness of an electrode facing one surface of the separation plate in the plurality of electrodes and a protruding height of each of the embossings disposed on the one surface of the separation plate, and
a thickness of the second gasket is the same as a thickness of an electrode facing the other surface of the separation plate in the plurality of electrodes.

9. The electrolyzer of claim 1, wherein the separation plate and the membrane-electrode assembly are alternately stacked,
wherein the separation plate is disposed at each of the uppermost and lowermost sides in a stacking direction.

10. The electrolyzer of claim 1, wherein the active area of one surface of the separation plate further comprises a first distribution part through which a fluid is introduced into and discharged from the first passage, and
the active area of the other surface of the separation plate further comprises a second distribution part through which the fluid is introduced into and discharged from the second passage.

11. The electrolyzer of claim 1, wherein the first passage is provided in an engraving portion of the first passage part, and
the second passage is provided in an engraving portion of the second passage part.

12. The electrolyzer of claim 1, wherein the embossings and the engravings provided in the first passage part and the second passage part are provided in a square shape.

13. The electrolyzer of claim 1, wherein each of a width of each of engravings provided in the first passage part and a width of each of engravings provided in the second passage part is 100 um to 5,000 um.

14. The electrolyzer of claim 1, wherein a width of each of engravings provided in the first passage part and a width of each of engravings provided in the second passage part are the same.

15. The electrolyzer of claim 1, wherein the separation plate has a thickness of 50 um to 500 um.
